# EUROPÄISCHE PATENTSCHRIFT

(11) **EP 1 060 002 B1**
(45) Veröffentlichungstag und Bekanntmachung des Hinweises auf die Patenterteilung: **21.05.2003**
(21) Anmeldenummer: 99910141.3
(22) Anmeldetag: 15.02.1999
(51) Int. Cl.: B01D 53/94, B01J 23/64

(54) **KATALYSATOR UND VERFAHREN ZUR ABGASREINIGUNG**
CATALYST AND METHOD FOR PURIFYING EXHAUST GASES
POT CATALYTIQUE ET PROCEDE D'EPURATION DE GAZ D'ECHAPPEMENT

(30) Priorität: 16.02.1998 DE 19806266
(43) Veröffentlichungstag der Anmeldung: 20.12.2000
(73) Patentinhaber: SIEMENS AKTIENGESELLSCHAFT, 80333 München (DE)
(72) Erfinder: NEUFERT, Ronald, D-96247 Michelau (DE); WITZEL, Frank, D-96215 Lichtenfels (DE)
(74) Vertreter: Tergau & Pohl Patentanwälte
(86) Internationale Anmeldenummer: DE9900413
(87) Internationale Veröffentlichungsnummer: WO99041000

(56) Entgegenhaltungen:
- EP-A- 0 212 513
- EP-A- 0 398 752
- EP-A- 0 544 282
- EP-A- 0 706 817
- EP-A- 0 827 778
- DE-A- 2 744 688
- US-A- 3 951 866

## Beschreibung

Die Erfindung betrifft einen Katalysator und ein Verfahren zur Reinigung des Abgases eines mit Luftüberschuß betriebenen Motors, insbesondere eines Fahrzeugmotors.

Bei der Verbrennung von Kraftstoffen, z.B. Diesel-Kraftstoff, entsteht bekanntlich eine Vielzahl unterschiedlicher Schadstoffgruppen. Zur Beseitigung oder Reduzierung dieser Schadstoffgruppen sind unterschiedliche katalytische Umsetzungen und unterschiedliche Katalysatoren oder Aktivmassen erforderlich. Um die Emissionen im Abgas zu reduzieren, sind in der Regel mehrere spezifisch wirkende Reinigungssysteme hintereinander oder parallel geschaltet. Dabei werden beispielsweise zur Reduzierung von NOₓ-Verbindungen andere Katalysatorsysteme verwendet als zur oxidativen Umsetzung von Kohlenwasserstoffverbindungen.

Ein Verfahren zur selektiven katalytischen NOₓ-Reduktion in sauerstoffhaltigem Abgas ist beispielsweise in der EP 0 487 886 B1 beschrieben. Der Abgasstrom wird mittels einer Dosiereinrichtung mit einem stickstoffhaltigen Reduktionsmittel versetzt. Anschließend wird dieses Gemisch mit einem SCR-Katalysator in Kontakt gebracht, der nach dem Verfahren der selektiven katalytischen Reduktion (SCR) im Abgas enthaltene Stickoxide mit dem Reduktionsmittel zu molekularem Stickstoff und Wasser zersetzt. Leichtflüchtige oder gasförmige organische Verbindungen (HVOC und VOC) und an Partikel anlagernde, mäßig bis schwer flüchtige Verbindungen (SOF) werden vom SCR-Katalysator im Niedertemperaturbereich nur unzureichend beeinflußt. Um diese Emissionen zu reduzieren, ist ein weiteres Katalysatorsystem in Form eines Oxidationskatalysators notwendig. Einem SCR-Katalysator ist daher meist ein Oxidationskatalysator, wie er z.B. in der EP 0 692 301 A2 beschrieben ist, nachgeschaltet. Der gerätetechnische Aufwand und die damit verbundenen Kosten sind somit bei herkömmlichen Katalysatorsystemen zur Reduzierung von NOₓ- und Kohlenwasserstoff-Emissionen relativ hoch. Darüber hinaus wird der Abgasstrom gelegentlich noch weiteren Reinigungsschritten unterzogen, was aber den apparativen Aufwand und die Kosten weiter erhöht.

Der Erfindung liegt daher die Aufgabe zugrunde, einen hinsichtlich des gerätetechnischen Aufwandes einfachen Katalysator zur besonders wirksamen Reinigung des Abgases eines mit Luftüberschuß betriebenen Motors anzugeben. Darüber hinaus soll ein besonders wirksames Reinigungsverfahren mittels eines solchen Katalysators angegeben werden.

Bezüglich des Katalysators wird diese Aufgabe erfindungsgemäß gelöst durch die Merkmale des Anspruchs 1. Bezüglich des Verfahrens wird die genannte Aufgabe erfindungsgemäß durch die Merkmale des Anspruchs 8 gelöst.

Dabei werden unter einem Hilfs- oder Füllstoff die für keramische Massen üblichen Füll-, Hilfs- und Bindemittel wie z.B. keramische Fasern oder Glasfasern als Füll-/Stützmittel, Harze, Schellack oder Zellulose als Porenbildner, und Butylglykol, Isopropanol, Ethylglykol oder Polyethylenoxid als Filmbildehilfsmittel verstanden.

Es hat sich überraschenderweise herausgestellt, daß mit der erfindungsgemäßen Aktivmasse in einem Abgas sowohl flüchtige organische Verbindungen als auch Stickoxide - letztere bei Gegenwart eines Stickstoffs enthaltenden Reduktionsmitteln - besonders wirksam vermindert werden können. Die organischen Verbindungen lagern sich im Niedertemperaturbereich chemiesorptiv an der Aktivmasse an; sie werden bei vergleichsweise hohen Temperaturen hauptsächlich zu Kohlendioxid und Wasser oxidiert. Gleichzeitig katalysiert die Aktivmasse aber auch die Reaktion zwischen den NOₓ-Verbindungen und dem dem Abgas zugeführten Reduktionsmittel.

Der Katalysator sowie das Verfahren ermöglichten somit eine simultane Umsetzung von organischen Verbindungen und NOₓ mit ein und derselben Aktivmasse. Wurden bisher für die genannten Umsetzungen zwei separate Katalysatorkörper in jeweils eigenen Gehäusen oder zumindest Gehäusepartitionen benötigt, ist nun nur noch ein einstöckiger Katalysator erforderlich. Dies verringert den notwendigen Einbauraum, was insbesondere bei Kraftfahrzeugen vorteilhaft ist, sowie die Herstellungskosten.

Besonders gute Reduktionswerte werden erreicht, wenn sich die . Aktivmasse in Gew.-% aus 70 - 95 % TiO₂, 2 - 10 % WO₃ und/oder MoO₃, 0,1 - 5 % V₂O₅, 0,1 - 8 % CaO und 0,1 - 10 % SiO₂ zusammensetzt.

Weiterhin hat sich gezeigt, daß sich die CO-Oxidationsaktivität der Aktivmasse durch Dotierung mit oder durch Beimengung von Elementen aus der Gruppe Pt, Pd, Rh, Ru und Ir verbessern läßt, ohne daß dabei die Fähigkeit zur simultanen NOₓ- und Kohlenwasserstoffverringerung merklich beeintrachtigt wird. Die genannten Elemente aus der Platinmetallgruppe des Periodensystems der Elemente (PSE) können einzeln oder in Mischung sowie in beliebiger anorganischer Form oder Verbindung, beispielsweise als Oxide, beigefügt sein.

Eine besonders gute CO-Oxidationsaktivität wird erhalten, wenn die genannten Platinmetalle mit einem Anteil von 0,01 - 5 Gew.-% zugesetzt sind.

Zur Herstellung des Katalysators kann die oben beschriebene Aktivmasse zu einem Vollextrudat extrudiert werden. Ein solcher monolithischer Katalysatorkörper ist beispielsweise von einer Vielzahl von parallelen, vom Abgas durchströmbaren Strömungskanälen durchsetzt. Eine andere Möglichkeit besteht darin, einen inerten Katalysatorkörper, z.B. aus Keramik oder aus Metall, mit der Aktivmasse zu beschichten. In jedem Fall wird die Aktivmasse durch Mischen, Vermahlen und Verkneten der Oxide oder ihrer Vorläuferverbindungen - gegebenenfalls unter Zusatz von üblichen keramischen Hilfs- und Füllstoffen - zubereitet. Ein Katalysatorkörper aus einer solchen Aktivmasse oder ein mit einer solchen Aktivmasse beschichteter metallischer oder keramischer Trägerkörper, beispielsweise in Waben- oder Plattenform, wird bei Temperaturen zwischen 20° C und 100° C getrocknet und bei einer Temperatur von 200° C bis 800° C calciniert.

Die BET-Oberfläche des Katalysators sollte im Bereich von 30 m²/g bis 150 m²/g liegen. Das Porenvolumen, gemessen nach dem Hg-Penetrationsverfahren, soll im Bereich von 100 mm³/g bis 1000 mm³/g bei mono- oder polymodaler Porenradienverteilung liegen.

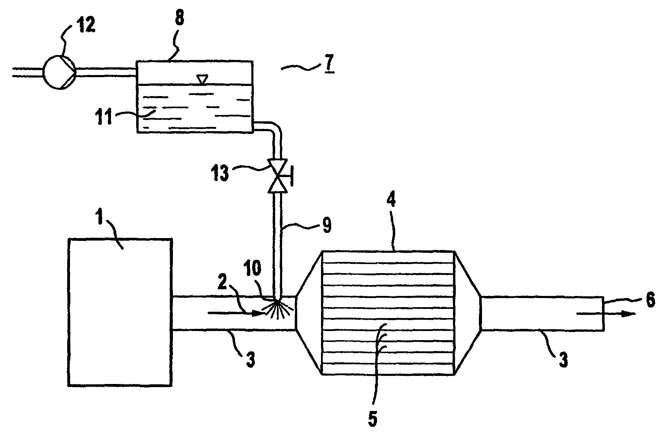

Ein Ausführungsbeispiel der Erfindung wird anhand einer Zeichnung näher erläutert. Dabei zeigt die Figur einen wabenförmigen Katalysatorkörper in einer Abgasreinigungsanlage eines Dieselmotors.

Nach der Figur ist eine Abgasreinigungsanlage zur katalytischen Reinigung des Abgases eines nicht näher dargestellten Dieselmotors 1 vorgesehen. Hierbei durchströmt das Abgas des Dieselmotors 1 als Gasstrom 2 eine Abgasleitung 3 und einen in der Abgasleitung 3 angeordneten Katalysator 4. Der Katalysator 4 ist als ein Wabenkörper ausgebildet; er weist eine Anzahl von parallelen, durchströmbaren Kanälen 5 auf. Nach Durchströmen des Katalysatorkörpers 4 wird der von den Stickoxiden befreite Gasstrom 2 über einen Auslaß 6 an die Umwelt abgegeben.

Der Katalysator 4 weist eine Aktivmasse mit 85 Gew.-% TiO₂, 7 Gew.-% WO₃, 2 Gew.-% V₂O₅, 1 Gew.-% CaO, 3 Gew.-% SiO und 2 Gew.-% Pt auf. Er ist als ein Vollextrudat aus der Aktivmasse hergestellt, umfaßt 40 x 40 Zellen und weist ein Katalysatorvolumen von 720 1 und eine spezifische Oberfläche von 890 m²/cm³ auf. Der Dieselmotor 1 ist ein 8-Zylinder-Dieselmotor mit einer Leistung von 920 KW bei einer Drehzahl von 750 1/min. Der Abgasvolumenstrom beträgt 720 m³/h, gemessen in Normkubikmetern unter Standardbedingungen.

Zum Abbau der Stickoxide NOₓ gemäß dem SCR-Verfahren ist an die Abgasleitung 3 in Strömungsrichtung vor dem Katalysator 4 eine Einbringvorrichtung 7 für ein Reduktionsmittel angeordnet. Die Einbringvorrichtung 7 umfaßt hierbei einen Reduktionsmittelbehälter 8 mit einer an die Abgasleitung 3 angeschlossenen Reduktionsmittelleitung 9. Die Reduktionsmittelleitung 9 mündet innerhalb der Abgasleitung 3 in einer Einspritzdüse 10. Mittels eines Verdichters 12 wird eine wäßrige Harnstofflösung 11 als Reduktionsmittel über das steuerbare Ventil 13 bedarfsabhängig in den Gasstrom 2 der Abgasleitung 3 eingebracht. In dem heißen Gasstrom 2 wird Harnstoff durch Pyro- und/oder Thermolyse in das Reduktiosmittel Ammoniak umgesetzt. An dem Katalysator 4 werden dann gemäß dem SCR-Verfahren die im Gasstrom 2 enthaltenen Stickoxide in Anwesenheit von Ammoniak zu molekularem Stickstoff und Wasser umgesetzt.

Mit den angegebenen Werten wurde ein NOₓ-Umsatz von 87,8 %, gleichzeitig ein Kohlenwasserstoff-Umsatz von 88,8 % und eine Partikelreduktion von 43,9 % erreicht. Der Katalysator (4) war dabei auf seine Betriebstemperatur erwärmt.

## Patentansprüche

1. Katalysator (4) zur Reinigung des Abgases eines mit Luftüberschuß betriebenen Motors, insbesondere eines Fahrzeugmotors (1), mit einer Aktivmasse, die sich aus den Oxiden TiO₂, V₂O₅, CaO und SiO₂ sowie zusätzlich WO₃ und/oder MoO₃ zusammensetzt, gegebenenfalls unter Zusatz eines Hilfs- oder Füllstoffes,
**dadurch gekennzeichnet, daß** sich die Aktivmasse wie folgt zusammensetzt (Gew.-%):
| | |
|---|---|
| TiO₂ | 70 - 95 % |
| WO₃ und/oder MoO₃ | 2 - 10 % |
| V₂O₅ | 0,1 - 5 % |
| CaO | 0,1 - 8 % |
| SiO₂ | 0,1 - 10 % |

2. Katalysator (4) nach Anspruch 1,
**dadurch gekennzeichnet, daß** die Aktivmasse wenigstens ein Element aus der Gruppe Pt, Pd, Rh, Ru und Ir in beliebiger anorganischer Form zusätzlich enthält.

3. Katalysator (4) nach Anspruch 2,
**gekennzeichnet durch** folgende Zusammensetzung seiner Aktivmasse (Gew.-%):
| | |
|---|---|
| TiO₂ | 7.0 - 95 % |
| WO₃ und/oder MoO₃ | 2 - 10 % |
| V₂O₅ | 0,1 - 5 % |
| CaO | 0,1 - 8 % |
| SiO₂ | 0,1 - 10 % |
| Pt, Pd, Rh, Ru und/oder Ir | 0,01 - 5 % |

4. Katalysator (4) nach einem der Ansprüche 1 bis 3,
**gekennzeichnet durch** einen einstückigen Katalysatorkörper aus oder beschichtet mit der Aktivmasse.

5. Katalysatorkörper (4) nach einem der Ansprüche 1 bis 4,
**dadurch gekennzeichnet, daß** die Aktivmasse eine BET-Oberfläche von 30 - 150 m²/g und/oder Porenvolumina, gemessen nach der Hg-Penetrationsmethode, von 100 - 1000 mm³/g, bei mono- oder polymodaler Porenradienverteilung aufweisen.

6. Katalysator (4) nach einem der Ansprüche 1 - 5,
**gekennzeichnet durch** einen Katalysatorkörper, der ein Vollextrudat aus der Aktivmasse ist.

7. Katalysator (4) nach einem Ansprüche 1 - 5,
**gekennzeichnet durch** einen Katalysatorkörper aus inertem Material, der mit der Aktivmasse beschichtet ist.

8. Verfahren zur Reinigung des Abgases eines mit Luftüberschuß betriebenen Verbrennungsmotors, insbesondere eines Fahrzeugmotors (1), bei dem
- dem Abgas ein stickstoffhaltiges Reduktionsmittel zudosiert, und
- das reduktionsmittelhaltige Abgas über einen Katalysator (4) nach einem der Ansprüche 1 bis 7 geleitet wird.

9. Verfahren nach Anspruch 8,
**dadurch gekennzeichnet, daß** als Reduktionsmittel Ammoniak oder Harnstoff (11) verwendet wird.

## Claims

1. Catalytic converter (4) for cleaning the exhaust gas from an engine which is operated with excess air, in particular from a vehicle engine (1), having an active material which is composed of the oxides TiO₂, V₂O₅, CaO and SiO₂ as well as, in addition, WO₃ and/or MoO₃, if appropriate with the addition of an auxiliary or filler, **characterized in that** the composition of the active material is as follows (% by weight):
| | |
|---|---|
| TiO₂ | 70 - 95% |
| WO₃ and/or MoO₃ | 2 - 10% |
| V₂O₅ | 0.1 - 5% |
| CaO | 0.1 - 8% |
| SiO₂ | 0.1 - 10% |

2. Catalytic converter (4) according to Claim 1, **characterized in that** the active material additionally contains at least one element selected from the group consisting of Pt, Pd, Rh, Ru and Ir in any inorganic form.

3. Catalytic converter (4) according to Claim 2, **characterized by** the following composition of its active material (% by weight):
| | |
|---|---|
| TiO₂ | 70 - 95% |
| WO₃ and/or MoO₃ | 2 - 10% |
| V₂O₅ | 0.1 - 5% |
| CaO | 0.1 - 8% |
| SiO₂ | 0.1 - 10% |
| Pt, Pd, Rh, Ru and/or Ir | 0.01 - 5% |

4. Catalytic converter (4) according to one of Claims 1 to 3, **characterized by** a single-piece catalytic body made from or coated with the active material.

5. Catalytic body (4) according to one of Claims 1 to 4, **characterized in that** the active material has a BET surface area of 30 - 150 m²/g and/or pore volumes, measured using the Hg penetration method, of 100 - 1000 mm³/g with a monomodal or polymodal pore radius distribution.

6. Catalytic converter (4) according to one of Claims 1 - 5, **characterized by** a catalytic body which is a solid extrudate made from the active material.

7. Catalytic converter (4) according to one of Claims 1 - 5, **characterized by** a catalytic body made from inert material which is coated with the active material.

8. Method for cleaning the exhaust gas from an internal combustion engine which is operated with excess air, in particular from a vehicle engine (1), in which
- a nitrogen-containing reducing agent is metered into the exhaust gas, and
- the exhaust gas which contains reducing agent is passed through a catalytic converter (4) according to one of Claims 1 to 7.

9. Method according to Claim 8, **characterized in that** the reducing agent used is ammonia or urea (11).

## Revendications

1. Pot (4) catalytique d'épuration des gaz d'échappement d'un moteur alimenté par un excès d'air, notamment d'un moteur (1) de véhicule automobile comprenant une masse active qui est composée des oxydes TiO₂, V₂O₅, CaO et SiO₂ ainsi qu'en plus de WO₃ et/ou de MoO₃, le cas échéant avec addition d'un adjuvant ou d'une charge,
**caractérisé en ce que** la masse active se compose de la matière suivante (% en poids) :
| | |
|---|---|
| TiO₂ | 70 à 95 % |
| WO₃ et/ou MoO₃ | 2 à 10 % |
| V₂O₅ | 0,1 à 5 % |
| CaO | 0,1 à 8 % |
| SiO₂ | 0,1 à 10 %. |

2. Pot (4) catalytique suivant la revendication 1,
**caractérisé en ce que** la masse active contient en plus au moins un élément du groupe Pt, Pd, Rh, Ru et Ir sous une forme minérale quelconque.

3. Pot (4) catalytique suivant la revendication 2,
**caractérisé par** la composition suivante de sa masse active (% en poids) :
| | |
|---|---|
| TiO₂ | 70 à 95 % |
| WO₃ et/ou MoO₃ | 2 à 10 % |
| V₂O₅ | 0,1 à 5 % |
| CaO | 0,1 à 8 % |
| SiO₂ | 0,1 à 10 %. |
| Pt, Pd, Rh, Ru et/ou Ir | 0,01 à 5 %. |

4. Pot (4) catalytique suivant l'une des revendications 1 à 3,
**caractérisé par** un corps de pot catalytique en une pièce ou revêtu de la masse active.

5. Pot (4) catalytique suivant l'une des revendications 1 à 4,
**caractérisé en ce que** la masse active a une surface BET de 30 à 150 m²/g et/ou un volume de pores mesuré suivant la méthode de pénétration de Hg de 100 à 1000 mm³/g pour une répartition monomodale ou polymodale des rayons des pores.

6. Pot (4) catalytique suivant l'une des revendications 1 à 5,
**caractérisé par** un corps de pot catalytique qui est un produit extrudé plein en la masse active.

7. Pot (4) catalytique suivant l'une des revendications 1 à 5,
**caractérisé par** un corps de pot catalytique en un matériau inerte et revêtu de la masse active.

8. Procédé d'épuration des gaz d'échappement d'un moteur à combustion interne alimenté par un excès d'air, notamment d'un moteur (1) de véhicule automobile, dans lequel
- on ajoute de manière dosée un agent réducteur azoté aux gaz d'échappement et
- on envoie les gaz d'échappement contenant l'agent réducteur sur un pot (4) catalytique suivant l'une des revendications 1 à 7.

9. Procédé suivant la revendication 8,
**caractérisé en ce que** l'on utilise de l'ammoniac ou de l'urée (11) comme agent réducteur.
